Europäisches Patentamt

European Patent Office

Office européen des brevets

(19)

(11) Numéro de publication: **0 223 653**
**B1**

(12) **FASCICULE DE BREVET EUROPEEN**

(45) Date de publication du fascicule du brevet:
28.03.90

(51) Int. Cl.⁴: **G01M 17/04**, F16F 9/46

(21) Numéro de dépôt: 86402252.0

(22) Date de dépôt: 10.10.86

(54) Procédé et dispositif de contrôle d'une suspension de véhicule par contrôle de l'adhérence.

(30) Priorité: 11.10.85 FR 8515081

(43) Date de publication de la demande:
27.05.87 Bulletin 87/22

(45) Mention de la délivrance du brevet:
28.03.90 Bulletin 90/13

(84) Etats contractants désignés:
DE GB IT

(56) Documents cités:
EP-A- 0 151 421
EP-A- 0 162 818
DE-A- 2 362 661
DE-A- 2 905 931
DE-A- 3 316 011
GB-A- 2 093 946
US-A- 4 458 234

(73) Titulaire: JAEGER, 2, rue Baudin,
F-92303 Levallois-Perret(FR)

(72) Inventeur: Delevallee, Jean-Louis, 14 Allée des Courlis,
F-95600 Cergy Saint Christophe(FR)
Inventeur: Reymond, Philippe, 26, rue Georges Boulet,
F-91330 Yerres(FR)

(74) Mandataire: Martin, Jean-Jacques et al, Cabinet
REGIMBEAU 26, Avenue Kléber, F-75116 Paris(FR)

ACTORUM AG

## Description

La présente invention concerne le contrôle de la suspension des véhicules automobiles.

On sait que les suspensions de véhicules automobiles sont généralement composées, pour chacune des roues, d'un ensemble, formé d'un amortisseur relié en parallèle à un ressort, disposé entre les masses suspendues et les masses non suspendues du véhicule.

On entend par masses suspendues l'ensemble des parties de la caisse du véhicule qui reposent sur la suspension; tandis que l'on entend par masses non suspendues l'ensemble des masses mobiles par rapport à la caisse, et en particulier les roues et triangles de suspension. Le cas échéant, les masses non suspendues comprennent également les freins et une partie des amortisseurs.

Le ressort de la suspension a pour fonction première de limiter la propagation, vers la caisse du véhicule, des mouvements verticaux des roues, afin d'accroître le confort routier.

Néanmoins, après avoir encaissé une irrégularité de la route le ressort ne retrouve pas rapidement sa position d'équilibre stable. L'énergie qu'il a emmagasinée tend à induire des oscillations de la caisse ainsi que des chocs et rebonds de la roue sur le sol pendant lesquels cette énergie se dissipe en chaleur.

Pour éviter cet inconvénient, on a proposé depuis longtemps de placer en parallèle du ressort un amortisseur dont le rôle est précisément de dissiper l'énergie emmagasinée dans le ressort, donc d'empêcher la création de mouvements parasites nocifs pour la qualité du confort et de la tenue de route.

L'amortisseur le plus couramment usité se compose d'un corps lié rigidement aux masses non suspendues, qui définit une chambre principale remplie d'un fluide hydraulique, d'une tige coulissante, liée rigidement à la caisse du véhicule et à un piston percé de trous calibrés et équipés de clapets, qui se déplace dans la chambre principale, et d'une chambre secondaire, dite de compensation, remplie partiellement de gaz et de fluide hydraulique, qui communique avec la chambre principale par l'intermédiaire de clapets.

Néanmoins, d'autres types d'amortisseurs pour suspension de véhicules ont été proposés.

La présente invention n'est pas limitée à un type d'amortisseur particulier.

La fonction de l'amortisseur est donc de transformer en chaleur l'énergie mécanique de mouvement de sa tige. Pour cela, l'amortisseur oppose au mouvement de sa tige une force sensiblement proportionnelle à la vitesse de cette dernière.

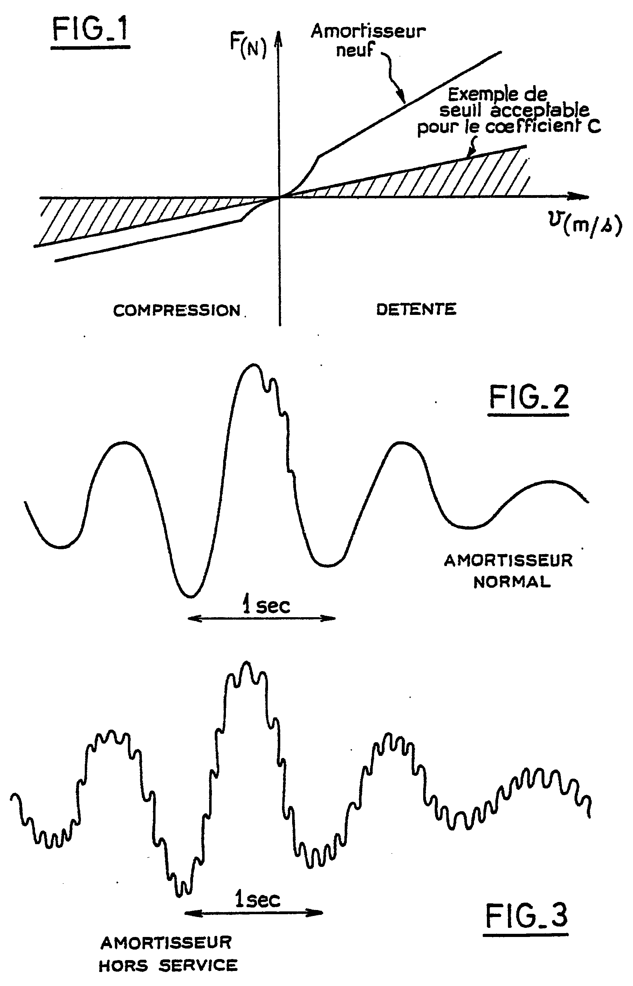

On a représenté schématiquement, sur la figure 1 annexée, la courbe : force appliquée sur la tige/ vitesse de la tige, d'un amortisseur.

Chaque partie de cette courbe, force appliquée sur la tige/vitesse de la tige, correspondant respectivement à la détente et à la compression de l'amortisseur, comporte deux zones.

La zone de courbe linéaire correspond aux conditions de fonctionnement où le fluide hydraulique circule par les clapets.

Quand la vitesse de la tige diminue la pression du fluide atteint une valeur seuil au-dessous de laquelle les clapets ne peuvent plus fonctionner. Le fluide hydraulique circule alors par les orifices calibrés. Cela correspond à la seconde zone de la courbe, de type parabolique.

On sait néanmoins que le vieillissement a pour effet de diminuer la viscosité du fluide hydraulique et d'abaisser progressivement l'efficacité des multiples étanchéités de l'amortisseur, notamment au niveau des joints et clapets.

Cela provoque bien sûr un affaissement de la caractéristique force/vitesse. Cet affaissement peut d'ailleurs apparaître uniquement sur une des zones de la courbe (zone linéaire ou parabolique) avant de s'étendre aux suivantes.

On sait par ailleurs que l'état de la suspension influence dans une large mesure la tenue de route du véhicule.

Il est donc souhaitable de disposer de moyens permettant de contrôler la suspension des véhicules.

De nombreux moyens de contrôle à cet effet ont déjà été proposés. Toutefois, ces moyens ne donnent pas pleinement satisfaction.

On a ainsi proposé, comme décrit dans le brevet US-A-2 923 147 et dans le brevet italien 431 283, des moyens de contrôle mécaniques. L'utilisation de ces moyens est cependant limitée aux garages d'entretien. De plus, ces moyens ne permettent qu'un contrôle statique. Enfin, ces moyens ne permettent pas un contrôle fréquent voire continu de la suspension. Au mieux, ces moyens mécaniques sont utilisés généralement à une fréquence de l'ordre de une fois par an.

On a également proposé, comme décrit dans les brevets US-A-3 921 945 et US-A-3 937 152, des moyens de détection des vibrations d'un véhicule. Cette disposition ne permet pas cependant de réaliser un contrôle précis et fiable.

On a également proposé, comme décrit dans les brevets GB-A-1 483 231 et US-A-4 317 105, des moyens sensibles à l'accélération du véhicule dans la direction verticale. Là encore, cependant, les dispositions de ce type jusqu'ici proposées ne permettent pas de réaliser un contrôle précis et fiable.

On a également proposé, comme décrit dans le brevet GB-A 1 508 527, de comparer les caractéristiques force et vitesse d'un amortisseur en utilisant deux capteurs sensibles respectivement à ces données. Les moyens de test décrits dans ce document permettent de contrôler la quantité de l'amortisseur mais ne permettent pas de contrôler l'ensemble de la suspension.

On a également proposé, comme décrit dans les brevets US-A 3 833 094 et US-A 3 646 512 d'utiliser des détecteurs de surcharge. Ces dispositifs ne permettent qu'une détection du type tout ou rien et ne permettent pas de renseigner sur l'état de la suspension.

On a également proposé d'utiliser des jauges de contrainte pour mesurer les forces exercées en divers points de la suspension. De tels dispositifs sont par exemple décrits dans les brevets US-A 4 458 234, DE-A 2 351 862 et DE-A 2 341 423. Ces documents cependant se contentent d'évoquer, pour l'exploitation des signaux électriques délivrés par les jauges, l'agencement de ces jauges en pont ou encore la mesure des variations d'amplitude, positives ou négatives, des forces exercées sur l'amortisseur et/ou le ressort. Ces dispositions ne délivrent qu'une information globale sur le fonctionnement de la suspension et ne permettent pas de délivrer une information précise et fiable sur l'état de la suspension utile au conducteur.

On a également proposé, comme décrit dans le document DE-A 2 362 661, de générer à l'aide d'un capteur un signal électrique représentatif des oscillations de la suspension, de filtrer le signal électrique pour retenir certaines fréquences seulement de celui-ci, puis de faire le quotient d'extrêma du signal retenu et de comparer ce quotient à une référence.

Le problème posé est de concevoir une technique de mesure permettant de détecter de façon fiable, économique et continue, à l'aide de moyens embarcables, l'état de la suspension.

L'un des buts principaux de la présente invention est de concevoir des moyens de mesure économiques, appropriés pour être installés en série sur les véhicules automobiles sans grever de façon significative le prix de revient de ceux-ci.

Le problème ainsi posé est résolu selon la présente invention par la mise en œuvre d'un procédé de contrôle de la suspension d'un véhicule qui comprend les étapes consistant à:

i) générer, à l'aide d'un capteur un signal électrique représentatif des oscillations de la suspension,

ii) filtrer le signal électrique pour retenir uniquement les oscillations générées par les masses non suspendues du véhicule et l'effet ressort du pneumatique (et notamment pour éliminer les oscillations basse fréquence créées par les masses suspendues du véhicule et le ressort de suspension), avant de

iii) traiter et exploiter le signal filtré, ce procédé étant caractérisé selon la présente invention par le fait que l'étape ii) de filtrage consiste à retenir uniquement les oscillations générées à une fréquence de l'ordre de 12 Hz et à éliminer les oscillations à une fréquence de l'ordre de 1 Hz ainsi que les fréquences supérieures à 15 Hz et l'étape iii) de traitement comprend l'étape consistant à détecter le dépassement par le signal filtré, pendant un temps prédéterminé, d'un seuil d'amplitude.

Le cas échéant, l'étape ii) de filtrage peut être réalisée par le capteur lui-même travaillant dans une plage de fréquences étroite centrée sur la fréquence des oscillations générées par les masses non suspendues et l'effet ressort du pneumatique.

Ce procédé permet de détecter un manque d'adhérence dû à une usure excessive d'un des composants de la suspension, ceci quel que soit le profil de la route et le type de suspension.

Ce procédé est basé sur la démonstration théorique (qui sera rappelée dans la description détaillée qui va suivre) et la vérification expérimentale, établies par la Demanderesse, selon lesquelles, à la suite d'une excitation due au profil de la route, l'ensemble composé des masses suspendues du véhicule et du ressort de suspension génère une oscillation de base de basse fréquence, généralement de l'ordre de 1 Hz, à laquelle se superpose une oscillation parasite de fréquence supérieure, généralement de l'ordre de 12 Hz, induite par l'ensemble composé des masses non suspendues du véhicule et de "l'effet ressort" du pneumatique, mais, et c'est là une constatation essentielle, le taux d'amortissement des oscillations parasites dépend beaucoup plus de l'état de l'amortisseur, que le taux d'amortissement des oscillations de base.

En d'autres termes, un amortisseur en bon état atténue convenablement les oscillations parasites dues aux masses non suspendues du véhicule et à l'effet ressort du pneumatique. Par contre, un amortisseur présentant une usure n'atténue pas correctement ces oscillations parasites, et par conséquent n'évite pas les rebonds responsables du décollement de la roue par rapport au sol, et de ce fait n'assure pas une tenue de route correcte.

L'influence de l'usure de l'amortisseur sur le niveau d'amortissement des oscillations de base est en revanche moins nette.

En effet, le faible couplage mécanique entre les différents étages de la suspension évite toute perturbation des signaux de 12 Hz. Alors que par contre, chaque demi-essieu se trouvant influencé par son homologue par l'intermédiaire de la masse suspendue, cela crée des interférences dans les signaux de base de 1 Hz.

Il est de plus avantageux d'utiliser des capteurs travaillant essentiellement dans les fréquences supérieures à 10 Hz, dans la mesure où de tels capteurs sont en général moins coûteux que ceux travaillant à des fréquences inférieures.

Selon une autre caractéristique de la présente invention, l'étape iii) de traitement comprend les étapes consistant à:

a) détecter le dépassement par le signal filtré d'un seuil d'amplitude,

b) initialiser une temporisation principale lors de la détection de ce dépassement,

c) initialiser également une temporisation secondaire d'une durée de consigne légèrement supérieure à la période des oscillations générées par les masses non suspendues et l'effet ressort du pneumatique, lors de la détection de ce dépassement,

d) vérifier si l'amplitude du signal filtré est supérieure au seuil à la fin de la temporisation secondaire,

e) remettre à zéro la temporisation principale lorsque le test de l'étape d) est négatif, et réitérer l'étape c) si l'étape de test d) est positive,

f) générer une alarme si la consigne de la temporisation principale est atteinte.

De préférence, le procédé comprend également l'étape intermédiaire consistant à redresser le signal filtré avant traitement.

La présente invention concerne également un dispositif de contrôle de la suspension d'un véhicule pour la mise en œuvre du procédé précité,

D'autres caractéristiques et avantages de la présente invention apparaîtront à la lecture de la description détaillée qui va suivre, et en regard des dessins annexés, donnés à titre d'exemple non limitatif, et sur lesquels:

— la figure 1 représente la courbe force/vitesse d'un amortisseur,

— la figure 2 représente le signal électrique mesuré en sortie d'un capteur disposé sur un ressort de suspension associé à un amortisseur en état de fontionnement correct, lors du franchissement d'un raccord de goudron à une vitesse de 80 km/h,

— la figure 3 représente le signal électrique mesuré en sortie d'un capteur de déplacement similaire fixé sur le ressort d'une suspension comportant un amortisseur hors service, lors du franchissement du même raccord de goudron à la vitesse de 80 km/h,

- les figures 4A et 4B représentent une modélisation des masses suspendues,

- les figures 5A et 5B représentent une modélisation des masses non suspendues,

- la figure 6 représente schématiquement la réponse d'un capteur placé sur le ressort de la suspension, à la suite d'une excitation du type profil occasionnel,

- la figure 7 représente schématiquement le signal obtenu après filtrage, d'une fréquence de l'ordre de 12 Hz due aux masses non suspendues du véhicule et à l'effet ressort du pneumatique,

- les figures 8 et 9 représentent différentes courbes qui seront explicitées par la suite,

- la figure 10 représente une vue schématique sous forme de blocs fonctionnels d'un exemple de réalisation du dispositif de contrôle conforme à la présente invention,

- la figure 11 représente schématiquement, sous forme d'organigramme, le procédé de contrôle conforme à la présente invention,

- la figure 12 représente un mode de réalisation préférentiel du dispositif de contrôle conforme à la présente invention.

La même échelle a été utilisée pour la représentation des figures 2 et 3.

Une simple comparaison des signaux illustrés sur ces figures montre que, comme cela était précédemment indiqué, le taux d'amortissement des oscillations parasites de 12 Hz dépend beaucoup plus de l'état de l'amortisseur que le taux d'amortissement des oscillations de base de 1 Hz.

En effet, ces oscillations de base possèdent sensiblement la même amplitude sur les figures 2 et 3 ce qui signifie que l'état de l'amortisseur influence peu le niveau d'atténuation des oscillations de base.

Par contre, on remarquera que si pour un amortisseur en état de fonctionnement normal, les oscillations parasites de 12 Hz sont quasi totalement amorties, comme représenté sur la figure 2, par contre, dans le cas d'un amortisseur hors service, comme illustré sur la figure 3, l'amplitude des oscillations parasites de 12 Hz est non négligeable.

La demanderesse a par ailleurs appuyé ses constatations expérimentales par une démonstration théorique que l'on va expliciter par la suite pour la bonne compréhension de la présente invention.

L'analyse théorique qui suit est basée d'une part sur l'exploitation d'un modèle de courbe force/allongement d'allure linéaire pour le ressort, c'est-à-dire un modèle répondant à la relation:

(1) $F_r = -k.A_1$ dans laquelle $F_r$ représente la force développée par le ressort, k représente la raideur du ressort, et $A_1$ représente l'allongement du ressort, et d'autre part sur l'exploitation d'un modèle de courbe force/vitesse, d'allure linéaire et de même pente quelle que soit la phase d'utilisation, compression ou détente, pour l'amortisseur, c'est-à-dire un modèle répondant à la relation:

(2) $F_a = -c.v$ dans laquelle $F_a$ représente la force developpée par l'amortisseur, c représente le coefficient de frottement visqueux, et v représente la vitesse de la tige.

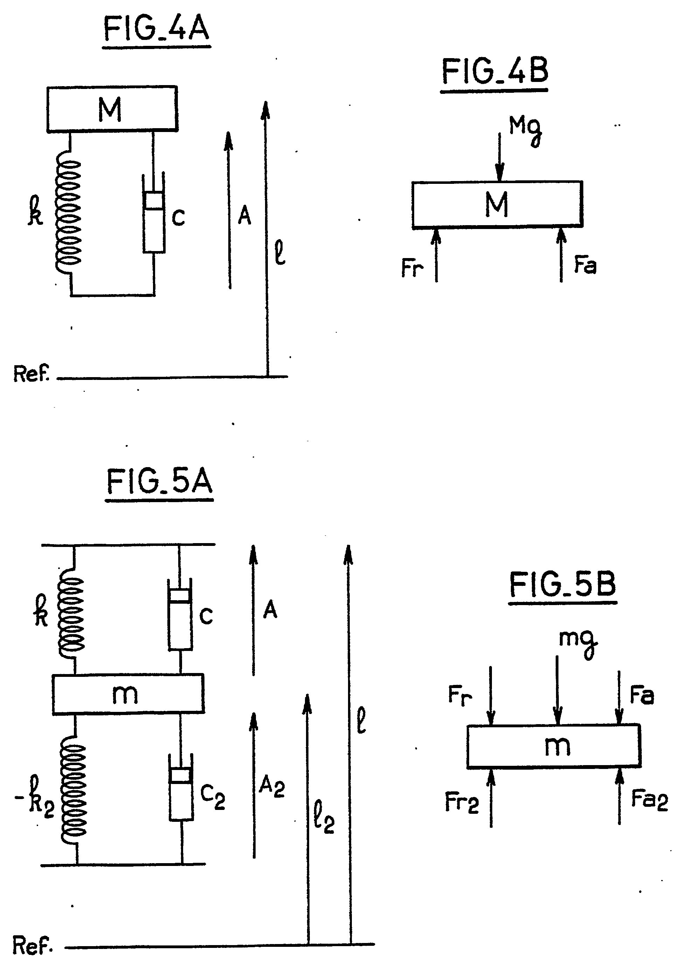

Le bilan des forces exercées au niveau des masses suspendues (schématisées sur les figures 4A, 4B) permet d'écrire d'une part en statique:

(3) $Mg = F_r + F_a$

$= F_r$

$= -k (A_0 - A_1)$ relation dans laquelle:

M représente la valeur de la masse suspendue
$A_0$ représente l'élongation du ressort au repos et
$A_1$ représente l'allongement du ressort dû à la masse suspendue,
d'autre part en dynamique:

$$(4) \quad M\ddot{l} = F_r + F_a - Mg = M\ddot{x} \text{ soit}$$
$$(5) \quad M\ddot{x} + c\dot{x} + kx = c\dot{x}_2 + kx_2,$$

relations dans lesquelles :
$l$ représente la hauteur de la masse suspendue, par rapport à une référence
$x$ représente le déplacement de la masse suspendue, et
$x_2$ représente le déplacement de la masse non suspendue.

Par ailleurs le bilan des forces exercées au niveau des masses non suspendues (schématisées sur les figures 5A, 5B) permet d'écrire, d'une part en statique:

(6) $mg = F_r + F_a + F_{r2} + F_{a2}$

$= F_r + F_{r2}$

$= k(A_0 - A_1) - k_2(A_{20} - Al_2)$ relation dans laquelle:

$m$ représente la valeur de la masse non suspendue,
$F_{r2}$ représente la force exercée sur la masse non suspendue résultant de l'élasticité du pneumatique,
$F_{a2}$ représente la force exercée sur la masse non suspendue résultant de l'effet d'amortisseur dû aux fibres du pneumatique,
$k_2$ représente la raideur du pneumatique
$A_{20}$ représente l'élongation au repos de l'élément ressort formé par le pneumatique, et
$Al_2$ représente l'allongement de cet élément dû aux masses mises en jeu,
d'autre part en dynamique:

$$(7) \quad m\ddot{l}_2 = F_r + F_a + F_{r2} + F_{a2} - mg = m\ddot{x}_2 \text{ soit}$$
$$(8) \quad m\ddot{x}_2 + (c + c_2)\dot{x}_2 + (k + k_2)x_2 = (c_2\dot{x}_1 + k_2x_1) + (c\dot{x} + kx)$$

($l_2$ représente la hauteur de la masse non suspendue,
$x_2$ représente le déplacement de la masse non suspendue,
$c_2$ représente le coefficient de frottement visqueux de l'effet d'amortisseur dû aux fibres du pneumatique, et
$x_1$ représente le déplacement du pneumatique.

En posant:

$$\omega = \sqrt{\frac{k}{M}} = \text{pulsation propre de la masse suspendue,}$$

$$\gamma = \frac{c}{2M\omega} = \text{coefficient d'amortissement de la suspension,}$$

$$\omega_1 = \sqrt{\frac{k}{m}} = \text{pulsation propre du demi-essieu par rapport}$$
$$\text{à la masse suspendue,}$$

$$\gamma_1 = \frac{c}{2m\omega_1} = \text{coefficient d'amortissement du demi-essieu}$$
$$\text{par rapport à la masse suspendue,}$$

$$\omega_2 = \sqrt{\frac{k_2}{m}} = \text{pulsation propre du demi-essieu par rapport}$$
$$\text{au sol,}$$

$$\gamma_2 = \frac{c_2}{2m\omega_2} = \text{coefficient d'amortissement du demi-essieu}$$
$$\text{par rapport au sol,}$$

les équations (5) et (8) s'écrivent :

$$(9) \quad \ddot{x} + 2\gamma\omega\dot{x} + \omega^2 x = 2\gamma\omega\dot{x}_2 + \omega^2 x_2 \quad \text{et}$$

$$(10) \quad \ddot{x}_2 + 2(\gamma_1\omega_1 + \gamma_2\omega_2)\dot{x}_2 + (\omega_1^2 + \omega_2^2)\, x_2 =$$
$$(2\gamma_2\omega_2\, \dot{x}_1 + \omega_2^2\, x_1) + (2\gamma_1\omega_1\dot{x} + \omega_1^2\, x)$$

En utilisant les transformées de Laplace, les équations (9) et (10) s'écrivent alors:

$$(11)\quad (p^2X) + 2\gamma\omega(pX) + \omega^2X = 2\gamma\omega(pX_2) + \omega^2X_2 \text{ et}$$

$$(12)\quad (p^2X_2) + 2(\gamma_1\omega_1 + \gamma_2\omega_2)(pX_2) + (\omega_1^2 + \omega_2^2)\,X_2 =$$
$$2\gamma_2\omega_2(pX_1) + \omega_2^2X_1 + 2\gamma_1\omega_1(pX) + \omega_1^2X$$

soit :

$$(13)\quad X = \frac{N_1}{D}\,.\,X_1 \text{ et}$$

$$(14)\quad X_2 = \frac{N_2}{D}\,.\,X_1 \text{ avec}$$

$$(15)\quad N_1 = \omega\omega_2\left[4\gamma\gamma_2p^2 + 2(\gamma\omega_2 + \gamma_2\omega)p + \omega\omega_2\right]$$

$$(16)\quad N_2 = 2\gamma_2\omega_2p^3 + (4\gamma\gamma_2\omega\omega_2 + \omega_2^2)p^2 + 2\omega\omega_2(\gamma_2\omega + \gamma\omega_2)p +$$
$$\omega^2\omega_2^2 \text{ et}$$

$$(17)\quad D = p^4 + 2(\gamma\omega + \gamma_1\omega_1 + \gamma_2\omega_2)p^3 + (\omega^2 + \omega_1^2 + \omega_2^2 +$$
$$4\gamma\gamma_2\omega\omega_2)p^2 + 2\omega\omega_2(\gamma_2\omega + \gamma\omega_2)p + \omega^2\omega_2^2.$$

Les formules (13) et (14) donnent donc les évolutions du mouvement de la caisse (X) et du mouvement de la roue ($X_2$) par rapport à une référence absolue et en fonction du profil de la route ($X_1$).

Le calcul montre que les quatre racines du dénominateur D (17) sont des nombres complexes conjugués deux à deux.

Ceci exprime que le filtre mécanique que réalise la suspension peut se décomposer en deux filtres du second ordre.

Par ailleurs un calcul numérique montre que ces deux filtres possèdent des fréquences de coupure se situant aux alentours de 1Hz et de 12 Hz.

La fréquence de coupure de 1 Hz est créée par les masses suspendues du véhicule et le ressort de suspension.

La fréquence de coupure de 12 Hz est générée par les masses non suspendues du véhicule et l'effet ressort du pneumatique.

Dans le cas d'une excitation de la suspension par un profil occasionnel assimilable à la fonction créneau susceptible d'engendrer une variation brutale de l'écrasement du ressort, tel qu'une marche de trottoir, le déplacement de la suspension répond à la relation suivante, en se replaçant dans le domaine temporel:

$$= \frac{Ad_1}{v}\,B_1\exp^{-Z_AW_At}.\,\sin(W_{Ad}t + \psi_1) +$$

$$\frac{Ad_1}{v}\,B_2\exp^{-Z_BW_Bt}.\,\sin(W_{Bd}t + \psi_2)$$

relation dans laquelle:
A représente l'amplitude de l'excitation
$d_1$ représente la longueur de l'excitation
v représente la vitesse du véhicule
$Z_A,Z_B$ représentent les facteurs d'amortissement de chacun des filtres,
$W_A,W_B$ représentent les pulsations de coupure de chacun des filtres,
$\phi_1\phi_2$ représentent les déphasages des signaux

$$W_{Ad} = W_A \sqrt{1 - z_A^2}$$

$$W_{Bd} = W_B \sqrt{1 - z_B^2}$$

$B_1$, $B_2$ représentent les coefficients d'amplitude.

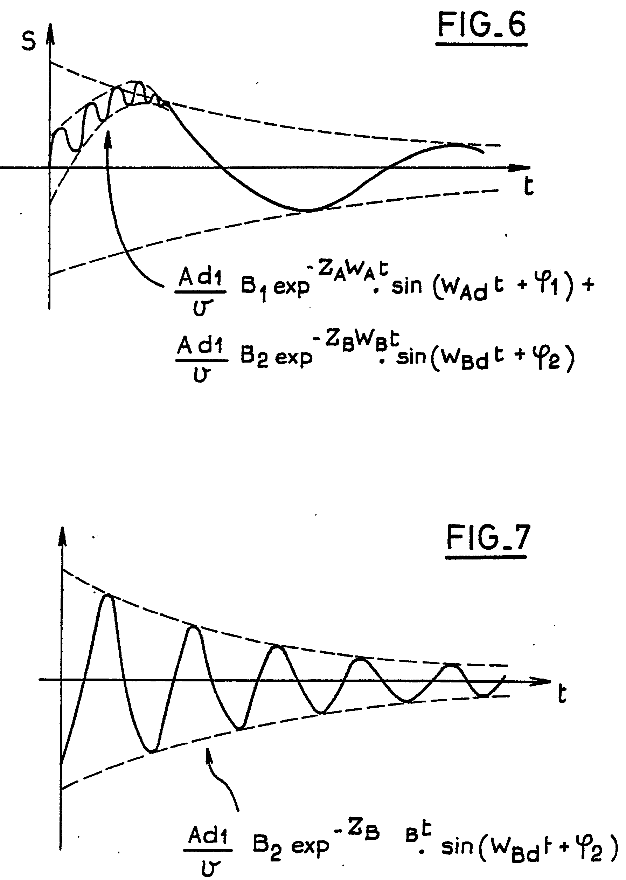

On a représenté schématiquement sur les figures 6 et 7 les signaux $s(t)$ et $s_2(t)$.

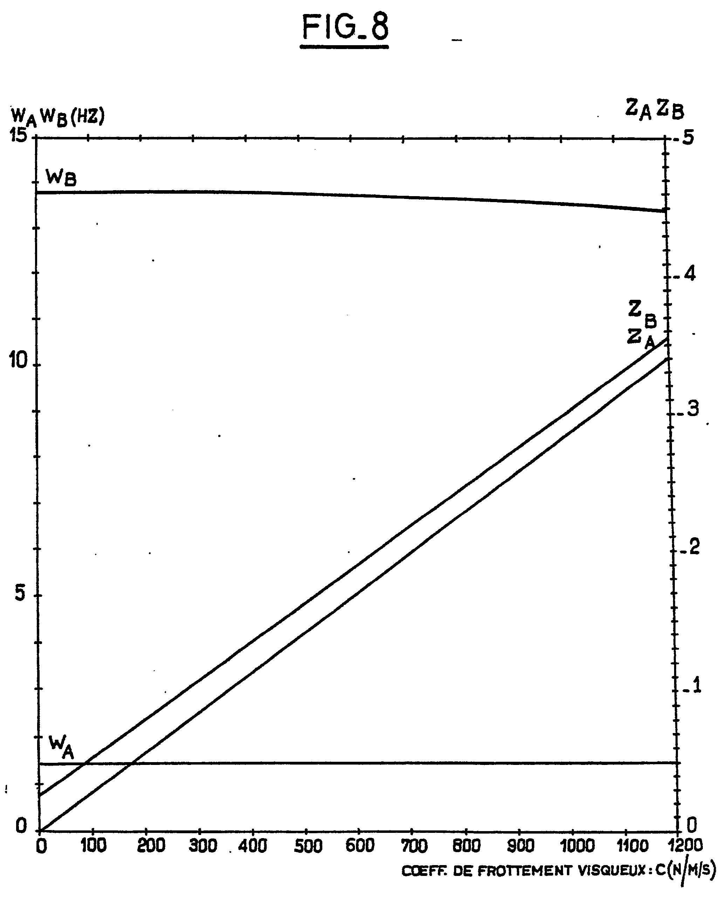

Les paramètres $W_A$, $W_B$, $Z_A$ et $Z_B$ sont représentés sur la figure 8 en fonction du coefficient de frottement visqueux.

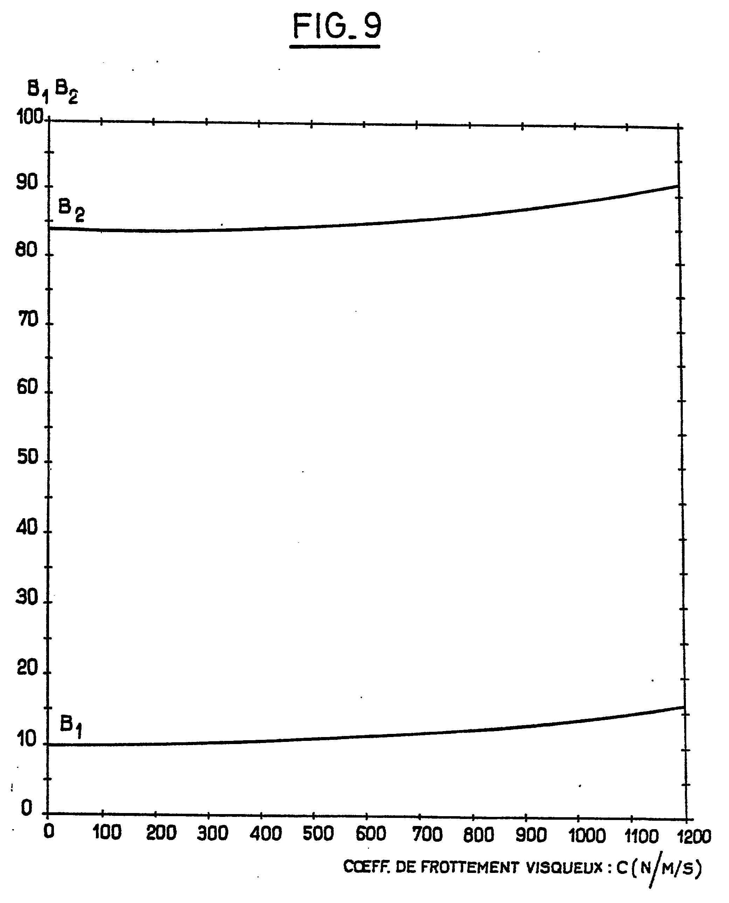

Par ailleurs, on montre que le coefficient $B_2$ correspondant au signal parasite de 12 Hz est bien supérieur à celui $B_1$ du signal de base, comme illustré sur la figure 9 qui illustre ces paramètres en fonction du coefficient de frottement visqueux.

En effet,

$$(19) \quad B_1 = \frac{1}{\varepsilon} \sqrt{\frac{(\beta - \alpha Z_A W_A)^2 + \alpha^2 W_{Ad}^2}{W_{Ad}^2}}$$

$$(20) \quad B_2 = \frac{1}{\varepsilon} \sqrt{\frac{(\delta - \mu Z_B W_B)^2 + \mu^2 W_{Bd}^2}{W_{Bd}^2}}$$

avec

$$(21) \quad \alpha = -2W_A W_B \left[ Z_A W_B^2 + \gamma_2 W_A^2 + \gamma_2 W_A W_B (1 - 4z_A^2) \right]$$

$$(22) \quad \beta = -W_A^2 W_B^2 \left[ W_B + W_A (1 - 4z_A^2 \gamma_2) \right]$$

$$(23) \quad \mu = 2W_B^3 \left[ \gamma_2 W_B + W_A (Z_A + \gamma_2 - 4z_A^2 \gamma_2) \right]$$

$$(24) \quad \delta = W_B^4 \left[ W_B + W_A (1 - 4z_A \gamma_2) \right]$$

$$(25) \quad \varepsilon = (W_B - W_A) \left[ W_A^2 + W_B^2 + 2W_A W_B (1 - 2\gamma^2) \right]$$

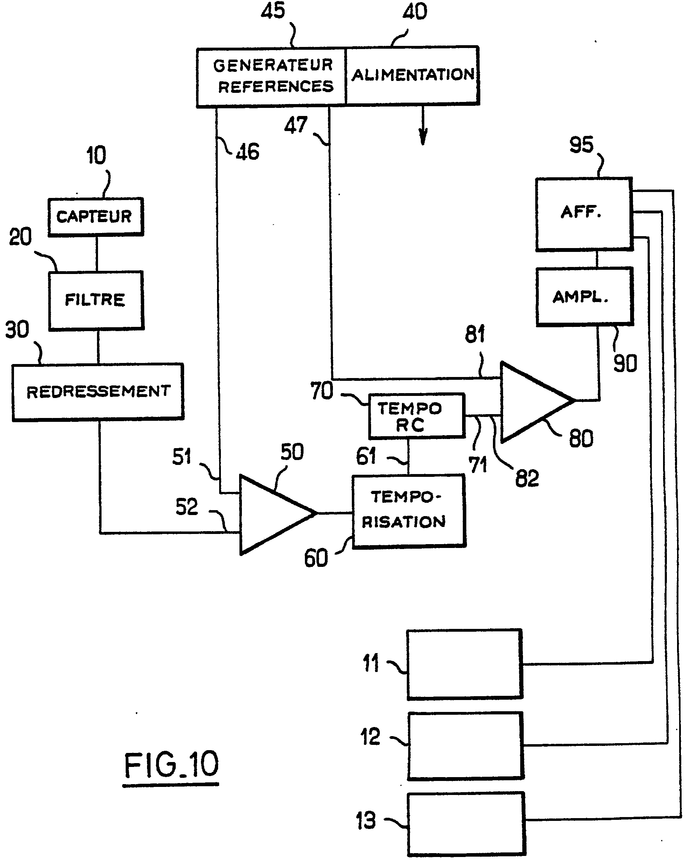

On va maintenant décrire le mode de réalisation du dispositif de contrôle conforme à la présente invention représenté schématiquement sous forme de blocs fonctionnels sur la figure 10.

Sur cette figure 10, le capteur est référencé 10.

Ce capteur 10 peut être un capteur sensible au déplacement relatif masses suspendues/masses non suspendues.

Le capteur 10 peut être disposé entre deux spires du ressort de la suspension, dans le cas d'un ressort à boudin.

Ce capteur 10 peut également être formé d'un capteur de force intercalé entre le ressort de la suspension et les masses suspendues ou les masses non suspendues.

Le capteur 10 peut par exemple être formé d'une cellule piézoélectrique.

Cependant, cette structure ne doit pas être considérée comme limitative.

Le signal électrique généré en sortie du capteur 10 est appliqué à un filtre passe-bande 20 qui a pour fonction de retenir les oscillations d'une fréquence de l'ordre de 12 Hz générées par les masses non suspendues du véhicule et l'effet ressort du pneumatique et d'éliminer les oscillations basse fréquence de 1 Hz créées par les masses suspendues du véhicule et le ressort de suspension ainsi que les fréquences supérieures aux fréquences générées par les masses non suspendues et l'effet ressort du pneumatique.

Le filtre 20 peut par exemple posséder une bande passante allant de 9 Hz à 15 Hz.

Le signal électrique filtré issu du filtre 20 est ensuite dirigé vers une cellule de redressement 30.

Le signal filtré redressé issu de la cellule 30 est ensuite appliqué à la première entrée 52 d'un comparateur 50.

Ce dernier reçoit sur sa seconde entrée 51 un signal électrique issu de la sortie 46 d'un générateur de référence 45.

Le signal électrique généré à la sortie 46 du générateur 45 correspond au seuil d'amplitude par rapport auquel on souhaite comparer le signal électrique généré par le capteur 10.

Lorsque l'amplitude du signal électrique 52 franchit le seuil appliqué sur la seconde entrée 51 du comparateur 50, la sortie de ce dernier bascule pour initialiser une temporisation dite secondaire 60.

Simultanément le basculement de la sortie 61 de cette temporisation secondaire initialise une temporisation principale 70.

La sortie 71 de cette temporisation principale 70 croît linéairement en fonction du temps.

La temporisation secondaire 60 possède une consigne de temps légèrement supérieure à la période des oscillations générées par les masses non suspendues et l'effet ressort du pneumatique.

Si la temporisation secondaire 60 n'est pas réamorcée par le comparateur 50 avant que sa consigne soit atteinte, la temporisation principale 70 est réinitialisée.

La sortie 71 de la temporisation principale 70 est reliée à la première entrée 82 d'un second comparateur 80.

La seconde entrée 81 du comparateur 80 est par ailleurs reliée à une sortie 47 du générateur de référence 45.

Le signal issu de la sortie 47 du générateur 45 correspond à la consigne de temps de la temporisation principale 70, c'est-à-dire au temps nécessaire pour que le signal linéaire en sortie de la temporisation 70 atteigne la valeur de ce signal.

La sortie du comparateur 80 qui bascule si la consigne de la temporisation principale est atteinte, c'est-à-dire si le signal en sortie de la temporisation 70 atteint la valeur du signal de consigne 47, est reliée à un amplificateur 90 qui attaque un système d'exploitation, par exemple un système d'affichage 95 permettant de visualiser une alarme lorsque les comparateurs 50 et 80 ont détecté le dépassement de ladite valeur de seuil 46 par les crêtes du signal électrique issu du capteur 10, et le maintien de ce signal au-dessus dudit seuil pendant toute la durée de la temporisation principale 70 définie par la consigne 47.

Bien entendu, le dispositif illustré sur la figure 10 peut faire l'objet de nombreuses variantes de réalisation.

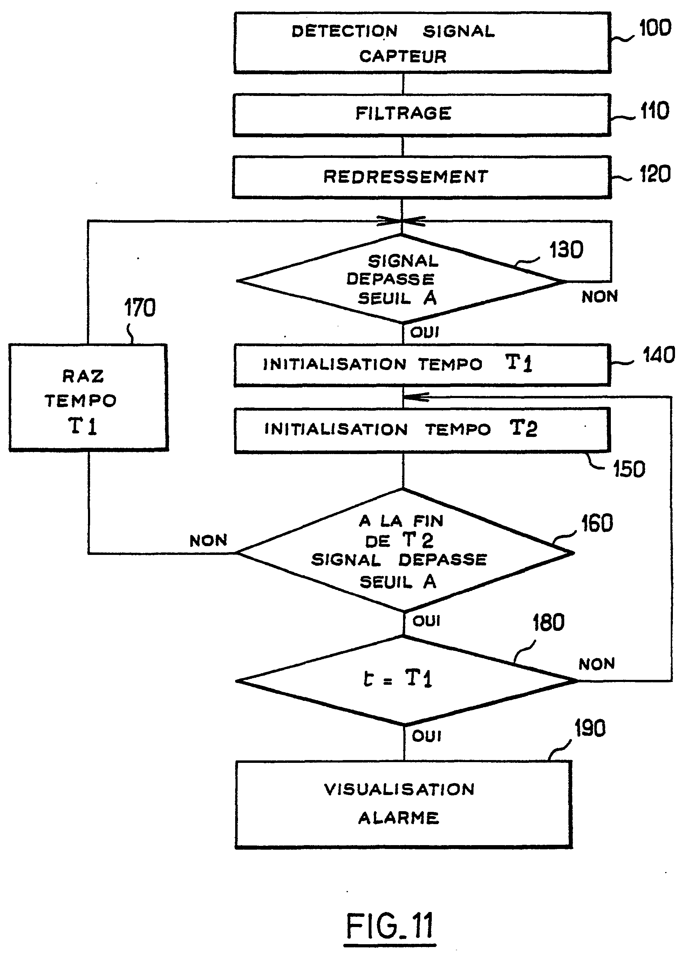

Le procédé conforme à la présente invention est schématisé sur la figure 11 annexée.

La première étape 100 du procédé conforme à la présente invention consiste à détecter le signal électrique issu du capteur sensible aux oscillations de la suspension.

Ce signal électrique est ensuite filtré à l'étape 110 puis redressé à l'étape 120.

L'étape ultérieure est une étape de test 130 consistant à détecter si le signal filtré et redressé dépasse un seuil A.

Dans la négative, l'étape 130 est réitérée.

Par contre, dans l'affirmative, la temporisation principale $T_1$ est initialisée à l'étape 140 et la temporisation secondaire $T_2$ est initialisée à l'étape 150.

A la fin de cette temporisation secondaire $T_2$ une nouvelle étape de test 160 contrôle si le signal électrique dépasse toujours le seuil A prédéterminé.

Dans la négative, l'amortisseur n'est pas hors service et a correctement atténué les signaux parasites de 12 Hz. Le processus de contrôle est donc repris à l'étape 130 après avoir remis à zéro la temporisation principale $T_1$ à l'étape 170.

Par contre, dans l'affirmative on passe à l'étape de test 180 qui détecte si la consigne de la temporisation principale $T_1$ est atteinte.

Si ce n'est pas le cas le processus de contrôle est repris à l'étape 150.

Par contre, si la consigne de la temporisation principale $T_1$ est atteinte, il convient de visualiser une alarme, à l'étape 190, l'amortisseur n'ayant pas rempli son rôle; un décollement persistant du pneumatique et donc un manque d'adhérence sont ainsi détectés.

De préférence, des moyens de mesure et de visualisation sont associés à chaque suspension. On a ainsi représenté schématiquement sur la figure 10 trois chaînes de mesure 11, 12, 13 associées à des suspensions respectives, identiques aux moyens précédemment décrits, et comprenant les éléments 10, 20, 30, 50, 60, 70, 80, 90. Le cas échéant les éléments 20, 30, 50, 60, 80 et 90 peuvent être communs aux diverses chaînes de mesure, les signaux issus des différents capteurs étant traités en séquence par multiplexage.

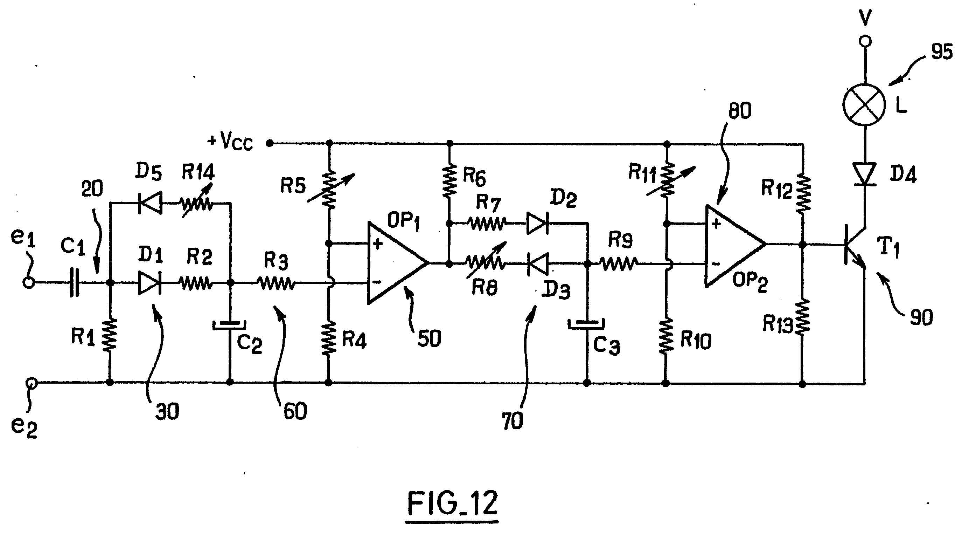

On va maintenant décrire le mode de réalisation du dispositif de contrôle conforme à la présente invention représenté sur la figure 12.

Ce dispositif comprend deux bornes d'entrée référencées $e_1$ et $e_2$ sur la gauche de la figure 12, auxquelles est destiné à être relié le capteur 10 précité.

De préférence, et bien que cela ne soit pas représenté sur la figure 12, le capteur 10 est relié aux bornes d'entrée $e_1$, $e_2$ par l'intermédiaire d'un étage d'adaptation d'impédance, constitué par exemple d'un amplificateur suiveur.

Le capteur 10 attaque ainsi un filtre 20 comprenant une capacité $C_1$ et une résistance $R_1$ connectées en série aux bornes $e_1$ et $e_2$, la résistance $R_f$ étant placée côté masse du montage.

La sortie du filtre 20 est définie par la borne commune à la capacité $C_1$ et la résistance $R_1$.

Le mode de réalisation précédemment décrit du filtre 20 n'est pas limitatif. Ce filtre pourra par exemple être remplacé par un filtre actif présentant une pente d'atténuation d'au moins - 3 dB.

Cette sortie du filtre 20 est reliée à l'entrée d'une cellule de redressement 30 et plus précisément à l'anode d'une diode $D_1$ dont la cathode est connectée à l'entrée d'une cellule RC en T référencée schématiquement 60, formant temporisation secondaire.

Cette cellule 60 comprend une résistance $R_2$ et une capacité $C_2$ connectées en série entre la cathode de la diode $D_1$ et la masse du montage, la capacité $C_2$ étant placée côté masse du montage, ainsi qu'une résistance $R_3$ reliée à la borne commune à la résistance $R_2$ et à la capacité $C_2$.

Un ensemble comprenant en série une résistance ajustable $R_{14}$ et une diode $D_5$ est connecté en parallèle de l'ensemble série comprenant la résistance $R_2$ et la diode $D_1$, la cathode de la diode $D_5$ étant reliée à l'anode de la diode $D_1$.

La sortie de la cellule RC 60 est prise sur la seconde borne de la résistance $R_3$.

Cette seconde borne de la résistance $R_3$ est reliée à l'entrée inverseuse d'un amplificateur opérationnel $OP_1$ jouant le rôle du comparateur 50 précité.

L'entrée non inverseuse de cet amplificateur opérationnel $OP_1$ est reliée au point médian d'un pont diviseur comprenant une résistance fixe $R_4$ et une résistance variable $R_5$ connectées en série entre la masse du montage et une borne d'alimentation positive + Vcc.

La sortie de l'amplificateur opérationnel $OP_1$ attaque une cellule RC formant temporisation principale 70.

Plus précisément, la sortie de l'amplificateur opérationnel $OP_1$ est reliée à la borne d'alimentation positive + $V_{cc}$ par l'intermédiaire d'une résistance $R_6$.

La sortie de l'amplificateur opérationnel $OP_1$ est par ailleurs reliée à la première borne d'une résistance $R_7$ et à la première borne d'une résistance $R_8$.

La seconde borne de la résistance $R_7$ est reliée à l'anode d'une diode $D_2$ dont la cathode est connectée à l'entrée de la cellule RC 70.

La seconde borne de la résistance ajustable $R_8$ est par contre reliée à la cathode d'une diode $D_3$ dont l'anode est reliée à l'entrée précitée de la cellule RC 70.

Cette cellule RC 70 comprend une capacité $C_3$ connectée entre d'une part le point commun à la cathode de la diode $D_2$ et l'anode de la diode $D_3$ et d'autre part la masse du montage, ainsi qu'une résistance $R_9$ dont une première borne est reliée au même point commun.

La seconde borne de la résistance $R_9$ constitue la sortie de la cellule de temporisation RC 70 .

Cette seconde borne de la résistance $R_9$ est reliée à l'entrée inverseuse d'un amplificateur opérationnel $OP_2$ jouant le rôle du comparateur 80 précité.

L'entrée non inverseuse de cet amplificateur opérationnel $OP_2$ est reliée au point médian d'un pont résistif comprenant une résistance fixe $R_{10}$ et une résistance variable $R_{11}$ connectées en série entre la masse du montage et la borne d'alimentation positive + $V_{cc}$.

La sortie de l'amplificateur $OP_2$ est reliée à la base d'un transistor $NPNT_1$ dont l'émetteur est relié à la masse du montage.

La base du transistor $T_1$ est par ailleurs reliée au point médian d'un pont de polarisation comprenant une résistance $R_{13}$ et une résistance $R_{12}$ connectées en série entre la masse du montage et la borne d'alimentation positive + $V_{cc}$.

Le collecteur du transistor $T_1$ est relié à un dispositif d'exploitation, par exemple un témoin de visualisation L.

Plus précisément, le collecteur du transistor $T_1$ est relié à la cathode d'une diode $D_4$ dont l'anode est reliée à une première borne du témoin de visualisation L.

La seconde borne du témoin de visualisation L est reliée à une borne d'alimentation positive V.

Le fonctionnement général du dispositif ainsi décrit est le suivant.

Le potentiel généré au point médian du pont résistif $R_4$ - $R_5$, qui est appliqué sur l'entrée non inverseuse du comparateur $OP_1$ définit le seuil d'amplitude A auquel on veut comparer le signal détecté.

De même, le potentiel défini au point médian du pont résistif $R_{10}$-$R_{11}$ et appliqué sur l'entrée non inverseuse du comparateur $OP_2$ définit la valeur de consigne de la temporisation principale 70.

Tant que les crêtes du signal issu du capteur 10 ne dépassent pas le seuil défini au point médian du pont résistif $R_4$-$R_5$, la sortie de l'amplificateur opérationnel $OP_1$ reste au niveau haut.

De ce fait, la capacité $C_3$ est chargée par l'intermédiaire de la diode $D_2$ et le comparateur 80 qui reçoit sur son entrée inverseuse un potentiel élevé voit sa sortie au niveau bas.

Le transistor $T_1$ est donc bloqué et le témoin de visualisation 95 non alimenté.

Par contre, dès lors que le potentiel appliqué sur l'entrée inverseuse du comparateur 50 par la cellule RC en T 60 dépasse le potentiel défini au point médian du pont résistif $R_4$-$R_5$, la sortie du comparateur 50 bascule au niveau bas.

La diode $D_2$ est alors bloquée et la capacité $C_3$ commence à se décharger par l'intermédiaire de la diode $D_3$.

Cela correspond à l'initialisation de la temporisation principale 70 .

Cette décharge de la capacité $C_3$ par l'intermédiaire de la diode $D_3$ est maintenue tant que la sortie du comparateur 50 ne rebascule pas au niveau haut, c'est-à-dire tant que le signal issu du capteur recharge suffisamment la capacité $C_2$ à chaque alternance pour appliquer sur l'entrée inverseuse du comparateur 50 un potentiel supérieur à celui défini au point médian du pont résistif $R_4$-$R_5$.

Si tel n'est pas le cas, c'est-à-dire si l'amplitude des crêtes du signal généré par le capteur 10 tombe en dessous du seuil, ce qui signifie un amortissement correct des oscillations, la sortie de l'amplificateur opérationnel OP1 repasse au niveau haut pour recharger rapidement la capacité $C_3$ par l'intermédiaire de la diode $D_2$ et remettre à zéro la temporisation principale 70.

En revanche, si la capacité $C_2$ est correctement rechargée à chaque période du signal délivré par le capteur 10 pour maintenir la sortie de l'amplificateur opérationnel OP1 au niveau bas et permettre de décharger suffisamment la capacité $C_3$ de telle sorte que le potentiel appliqué sur l'entrée inverseuse du comparateur 80 tombe en dessous de la valeur de consigne définie par le point médian du pont résistif $R_{10}$, $R_{11}$, la sortie du comparateur 80 passe au niveau haut pour saturer le transistor $T_1$ à l'état conducteur et alimenter le témoin de visualisation 95 .

Le basculement de la sortie du comparateur 80 au niveau haut signifie en effet que les crêtes du signal délivré par le capteur 10 ont dépassé le seuil d'amplitude défini au point médian du pont résistif $R_4$-$R_5$ pendant la durée de consigne définie par le potentiel présent au point médian du pont résistif $R_{10}$-$R_{11}$.

Cela signifie en d'autres termes que l'amortisseur n'a pas rempli son rôle et qu'un décollement persistant du pneumatique et donc un manque d'adhérence ont été détectés.

Selon un exemple de réalisation conforme à la présente invention donné à titre d'illustration non limitative:
- les diodes ($D_1$, $D_2$, $D_3$ ,$D_4$ et $D_5$) sont du type 1N4004,
- le transistor $T_1$ est du type BC 639,
- les comparateurs $OP_1$ et $OP_2$ sont du type CM2903,
- les résistances $R_2$, $R_3$, $R_4$, $R_9$ et $R_{10}$ = 10 kΩ,
- les résistances $R_5$, $R_{11}$ sont des résistances variables de 10 kΩ,
- les résistances $R_1$ et $R_6$ = 4,7 kΩ,
- les résistances $R_8$ et $R_{14}$ sont des résistances ajustables de 100 kΩ
- les résistances $R_{12}$ et $R_{13}$ = 1 kΩ,
- les capacités $c_1$, $c_2$ et $c_3$ = 10 µF.

Bien entendu, la présente invention n'est pas limitée au mode de réalisation particulier qui vient d'être décrit mais s'étend à toute variante conforme à son esprit.

De préférence les moyens de visualisation 95 sont adaptés pour délivrer une alarme spécifique pour chacune des suspensions.

La présente invention trouve application aussi bien dans le cas des suspensions à roues indépendantes que dans le cas des suspensions à pont rigide.

## Revendications

1. Procédé de contrôle de la suspension d'un véhicule comprenant les étapes consistant à:
i) générer (100) à l'aide d'un capteur (10) un signal électrique représentatif des oscillations de la suspension, et
ii) filtrer (110) le signal électrique pour retenir uniquement les oscillations générées par les masses non suspendues du véhicule et l'effet ressort du pneumatique, avant de
iii) traiter (130, 140, 150) et exploiter le signal filtré, caractérisé par le fait que l'étape ii) de filtrage (110) consiste à retenir uniquement les oscillations générées à une fréquence de l'ordre de 12 Hz et à éliminer les oscillations créées à une fréquence de l'ordre de 1 Hz, ainsi que les fréquences supérieures à 15 Hz, et caractérisé par le fait que l'étape iii) de traitement (130, 140, 150) comprend l'étape consistant à détecter le dépassement par le signal filtré, pendant un temps prédéterminé, d'un seuil d'amplitude.

2. Procédé selon la revendication 1 caractérisé par le fait que l'étape iii) de traitement comprend les étapes consistant à:
a) détecter (130) le dépassement par le signal filtré d'un seuil d'amplitude,
b) initialiser une temporisation principale (140) lors de la détection de ce dépassement,
c) initialiser également une temporisation secondaire (150) d'une durée de consigne légèrement supérieure à la période des oscillations générées par les masses non suspendues et l'effet ressort du pneumatique, lors de la détection de ce dépassement,
d) vérifier (160) si l'amplitude du signal filtré est supérieure au seuil à la fin de la temporisation secondaire,

e) remettre à zéro la temporisation principale (170) lorsque le test de l'étape d) est négatif et réitérer l'étape c) si le test de l'étape d) est positif,

f) générer (190) une alarme si la consigne de la temporisation principale est atteinte (180).

3. Procédé selon l'une des revendications 1 ou 2, caractérisé par le fait qu'il comprend l'étape intermédiaire (120) consistant à redresser le signal filtré avant traitement.

4. Dispositif de contrôle de la suspension d'un véhicule pour la mise en œuvre du procédé selon l'une des revendications 1 à 3, du type comprenant:

– un capteur (10) générant un signal électrique représentatif des oscillations de la suspension,

– des moyens de filtrage (20) aptes à retenir uniquement les oscillations générées par les masses non suspendues du véhicule et l'effet ressort du pneumatique, et

– des moyens de traitement (50, 60, 80) du signal filtré, caractérisé par le fait que les moyens de filtrage (20) comprennent un filtre passe-bande possédant une bande passante comprise entre 9 Hz et 15 Hz, et caractérisé par le fait que les moyens de traitement comprennent des moyens (50, 60, 70, 80) de détection de seuil et de temporisation adaptés pour détecter le dépassement par le signal filtré et pendant un temps prédéterminé, d'un seuil d'amplitude.

5. Dispositif selon la revendication 4, caractérisé par le fait que les moyens de traitement comprennent:

– une temporisation principale (70),

– une temporisation secondaire (60) qui possède une consigne légèrement supérieure à la période des oscillations générées par les masses non suspendues du véhicule et l'effet ressort du pneumatique et qui est adaptée pour être réinitialisée cycliquement au rythme de la période du signal filtré,

– des moyens de comparaison (50) adaptés pour vérifier si l'amplitude du signal filtré dépasse un seuil à la fin de chaque consigne de la temporisation secondaire et pour remettre la temporisation principale à zéro si ce test est négatif,

– des moyens de commande (80) adaptés pour visualiser une alarme (95) si la consigne de la temporisation principale (70) est atteinte.

6. Dispositif selon la revendication 5 caractérisé par le fait que les temporisations (70, 60) comprennent chaque des cellules de type RC, et par le fait que les moyens de comparaison (50) et les moyens de commande (80) comprennent chacun un comparateur relié respectivement à l'une des cellules de type RC.

7. Dispositif selon l'une des revendications 4 à 6, caractérisé par le fait que le capteur (10) est un capteur sensible au déplacement relatif masses suspendues/masses non suspendues.

8. Dispositif selon l'une des revendications 4 à 7, caractérisé par le fait que le capteur (10) est une cellule piézoélectrique.

9. Dispositif selon l'une des revendications 4 à 8, caractérisé par le fait que le capteur (10) est disposé entre deux spires d'un ressort à boudin de la suspension.

10. Dispositif selon l'une des revendications 4 à 9, caractérisé par le fait que le capteur (10) est un capteur de force intercalé entre le ressort de la suspension et les masses suspendues ou non suspendues.

## Claims

1. Method for checking the suspension of a vehicle comprising the stages consisting of:

i) generating (100) by means of a sensor (10) an electrical signal representative of the oscillations of the suspension, and

ii) filtering (110) the electrical signal in order to retain solely the oscillations generated by the non-suspended masses of the vehicle and the spring effect of the tyre, before

iii) processing (130, 140, 150) and exploiting the filtered signal, characterised by the fact that the stage ii) of filtering (110) consists of retaining solely the oscillations generated at a frequency of the order of 12 Hz and of eliminating the oscillations created at a frequency of the order of 1 Hz, as well as frequencies greater than 15 Hz and characterised by the fact that the stage iii) of processing (130, 140, 150) comprises the stage consisting of detecting when the filtered signal exceeds an amplitude threshold for a predetermined period of time.

2. Method according to Claim 1, characterised by the fact that the processing stage iii) comprises the stages consisting of:

a) detecting (130) when the filtered signal exceeds an amplitude threshold,

b) initiating a main delay (140) when this excess is detected,

c) also initiating a secondary delay (150) having a reference period slightly greater than the period of the oscillations generated by the non-suspended masses and the spring effect of the tyre, when this excess is detected,

d) checking (160) if the amplitude of the filtered signal is greater than the threshold at the end of the secondary delay,

e) resetting the main delay (170) to zero when the test of stage d) is negative and repeating stage c) if the test of stage d) is positive,

f) generating (190) an alarm if the reference of the main delay is reached (180).

3. Method according to one of Claims 1 or 2, characterised by the fact that it comprises the intermediate stage (120) consisting of rectifying the filtered signal before processing.

4. Apparatus for checking the suspension of a vehicle for carrying out the method according to one of Claims 1 to 3, of the type comprising:
- a sensor (10) generating an electrical signal representative of the oscillations of the suspension,
- filtering means (20) able to retain solely the oscillations generated by the non-suspended masses of the vehicle and the spring effect of the tyre, and
- means (50, 60, 80) for processing the filtered signal, characterised by the fact that the filtering means (20) comprise a passband filter having a passband comprised between 9 Hz and 15 Hz and characterised by the fact that the processing means comprise means (50, 60, 70, 80) for the detection of the threshold and for a delay, adapted to detect when the filtered signal exceeds an amplitude threshold for a predetermined period of time.

5. Apparatus according to Claim 4, characterised by the fact that the processing means comprise:
- a main delay (70),
- a secondary delay (60) which has a reference slightly higher than the period of the oscillations generated by the non-suspended masses of the vehicle and the spring effect of the tyre and which is adapted to be reinitiated cyclically at the rhythm of the period of the filtered signal,
- comparison means (50) adapted to check if the amplitude of the filtered signal exceeds a threshold at the end of each reference of the secondary delay and to reset the main delay to zero if this test is negative,
- control means (80) adapted to visualise an alarm (95) if the reference of the main delay (70) is reached.

6. Apparatus according to Claim 5, characterised by the fact that the delays (70, 60) each comprise cells of the RC type and by the fact that the comparison means (50) and the control means (80) each comprise a comparator connected respectively to one of the cells of the RC type.

7. Apparatus according to one of Claims 4 to 6, characterised by the fact that the sensor (10) is a sensor sensitive to the relative displacement of the suspended masses/non-suspended masses.

8. Apparatus according to one of Claims 4 to 7, characterised by the fact that the sensor (10) is a piezoelectric cell.

9. Apparatus according to one of Claims 4 to 8, characterised by the fact that the sensor (10) is disposed between two turns of a spiral spring of the suspension.

10. Apparatus according to one of Claims 4 to 9, characterised by the fact that the sensor (10) is a force sensor interposed between the spring of the suspension and the suspended or non-suspended masses.

**Patentansprüche**

1. Verfahren zum Überwachen der Aufhängung eines Fahrzeugs, mit den Schritten:
(i) Erzeugen (100) eines für die Schwingungen der Aufhängung repräsentativen Signals mit Hilfe eines Aufnehmers (10), und
(ii) Filtern (110) des elektrischen Signals zum Zurückhalten einzig und allein der von den nicht-gefederten Massen des Fahrzeugs und durch den Federeffekt der Luftbereifung erzeugten Schwingungen, vor dem
(iii) Verarbeiten (130, 140, 150) und Auswerten des gefilterten Signals, dadurch gekennzeichnet, daß der Schritt (ii) des Filterns (110) darin besteht, einzig und allein die bei einer Frequenz der Größenordnung 12 Hz erzeugten Schwingungen zurückzuhalten und insbesondere die mit einer Frequenz der Größenordnung 1 Hz erzeugten Schwingungen zu eliminieren, ebenso wie die Frequenzen höher als 15 Hz, und dadurch gekennzeichnet, daß der Schritt (iii) des Verarbeitens (130, 140, 150) den Schritt des Erfassens des Überschwingens eines Schwellenwertes der Amplitude durch das gefilterte Signal während einer festgelegten Zeit umfaßt.

2. Verfahren nach Anspruch 1, dadurch gekennzeichnet, daß der Schritt (iii) des Verarbeitens aus den Schritten
a) Erfassen (130) des Überschwingens einer Schwellenamplitude durch das gefilterte Signal,
b) Initialisieren einer Hauptverzögerungszeit (140), vom Erfassen des Überschwingens an,
c) gleichzeitiges Initialisieren einer Sekundärverzögerungszeit (150) einer Einstelldauer leicht über der Periode der von den nicht-gefederten Massen des Fahrzeugs und durch den Federeffekt der Luftbereifung erzeugten Schwingungen, vom Erfassen des Überschwingens an,
d) Verifizieren (160), ob die Amplitude des gefilterten Signals am Ende der Sekundärverzögerungszeit oberhalb des Schwellenwertes liegt,
e) Zurücksetzen auf Null der Hauptverzögerungszeit (170), wenn der Test des Schrittes d) negativ ausfällt, und Wiederholen des Schrittes c), wenn der Test des Schrittes d) positiv ausfällt,
f) Erzeugen (190) eines Alarms, wenn der Einstellwert der Hauptverzögerungszeit erreicht ist (180), besteht.

3. Verfahren nach einem der Ansprüche 1 oder 2, dadurch gekennzeichnet, daß es den Zwischenschritt (120) des Gleichrichtens des gefilterten Signals vor der Verarbeitung enthält.

4. Überwachungsvorrichtung für die Aufhängung eines Fahrzeugs zum Durchführen des Verfahrens nach einem der Ansprüche 1 bis 3, mit
– einem Aufnehmen (10) zum Erzeugen eines für die Schwingungen der Aufhängung repräsentativen Signals,
– Filtereinrichtungen (20) zum Zurückhalten einzig und allein der von den nicht-gefederten Massen des Fahrzeugs und durch den Federeffekt der Luftbereifung erzeugten Schwingungen, und
– Verarbeitungseinrichtungen (50, 60, 80) für das gefilterte Signal, dadurch gekennzeichnet, daß die Filtereinrichtungen (25) ein Bandpaßfilter mit einem Bandpaß zwischen einschließlich 9 und 15 Hz aufweisen und dadurch gekennzeichnet, daß die Verarbeitungseinrichtungen Schwellenerfassungs- und Verzögerungsschaltungs-Einrichtungen (50, 60, 70, 80) zum Erfassen des Überschwingens eines Amplitudenschwellenwertes durch das gefilterte Signal und während einer festgelegten Zeit aufweisen.

5. Vorrichtung nach Anspruch 4, dadurch gekennzeichnet, daß die Verarbeitungseinrichtungen
– eine Hauptverzögerungsschaltung (70),
– eine Sekundärverzögerungsschaltung (60) mit einem Einstellwert leicht über der Periode der von nicht-gefederten Massen des Fahrzeugs und durch den Federeffekt der Luftbereifung erzeugten Schwingungen, die zyklisch im Rhythmus der Periode des gefilterten Signals wieder initialisiert wird,
– Vergleichseinrichtungen (50) zum Verifizieren, ob die Amplitude des gefilterten Signals am Ende der Sekundärverzögerungzeit oberhalb des Schwellenwertes liegt, und zum Zurücksetzen auf Null der Hauptverzögerungszeit (170), wenn der Test negativ ausfällt,
– Steuereinrichtungen (80) zum Sichtbarmachen eines Alarms, wenn der Einstellwert der Hauptverzögerungszeit erreicht ist (180), aufweisen.

6. Vorrichtung nach Anspruch 5, dadurch gekennzeichnet, daß jede der Verzögerungsschaltungen (70, 60) RCGlieder aufweist und dadurch, daß die Vergleichseinrichtungen (50) und die Steuereinrichtungen (80) alle einen mit den RC-Gliedern verbundenen Komparator aufweisen.

7. Vorrichtung nach einem der Ansprüche 4 bis 6, dadurch gekennzeichnet, daß der Aufnehmer (10) ein auf die relative Verschiebung gefederte Massen/nicht-gefederte Massen ansprechender Aufnehmer ist.

8. Vorrichtung nach einem der Ansprüche 4 bis 7, dadurch gekennzeichnet, daß der Aufnehmer (10) eine piezoelektrische Zelle ist.

9. Vorrichtung nach einem der Ansprüche 4 bis 8, dadurch gekennzeichnet, daß der Aufnehmer (10) zwischen zwei Windungen einer Sprungfeder der Aufhängung angeordnet ist.

10. Vorrichtung nach einem der Ansprüche 4 bis 9, dadurch gekennzeichnet, daß der Aufnehmer (10) ein Kraftaufnehmer zwischen der Feder der Aufhängung und den gefederten oder nicht-gefederten Massen ist.

FIG.1

COMPRESSION     DETENTE

FIG.2

AMORTISSEUR NORMAL

1 sec

AMORTISSEUR HORS SERVICE

1 sec

FIG.3

FIG.4A

FIG.4B

FIG.5A

FIG.5B

FIG. 6

$$\frac{Ad1}{\upsilon} \; B_1 \exp^{-Z_A W_A t} \cdot \sin(W_{Ad} t + \varphi_1) +$$

$$\frac{Ad1}{\upsilon} \; B_2 \exp^{-Z_B W_B t} \cdot \sin(W_{Bd} t + \varphi_2)$$

FIG. 7

$$\frac{Ad1}{\upsilon} \; B_2 \exp^{-Z_B \, B t} \cdot \sin(W_{Bd} t + \varphi_2)$$

# FIG.8

# FIG. 9

FIG.10

DETECTION SIGNAL CAPTEUR — 100

FILTRAGE — 110

REDRESSEMENT — 120

SIGNAL DEPASSE SEUIL A — 130 / NON

OUI

INITIALISATION TEMPO T1 — 140

RAZ TEMPO T1 — 170

INITIALISATION TEMPO T2 — 150

A LA FIN DE T2 SIGNAL DEPASSE SEUIL A — 160 / NON

OUI

t = T1 — 180 / NON

OUI

VISUALISATION ALARME — 190

FIG. 11

FIG_12